# EUROPEAN PATENT SPECIFICATION

(11) **EP 3 952 658 B1**
(45) Date of publication and mention of the grant of the patent: **07.09.2022**
(21) Application number: 20711628.6
(22) Date of filing: 23.03.2020
(51) Int. Cl.: A23D 7/005

(54) **OIL-IN-WATER EMULSIFIED FOOD COMPOSITION WITH HIGH OLEIC OIL**
ÖL-IN-WASSER-EMULGIERTE LEBENSMITTELZUSAMMENSETZUNG MIT ÖLSÄUREREICHEM ÖL
COMPOSITION ALIMENTAIRE ÉMULSIFIÉE HUILE-DANS-EAU AVEC DE L'HUILE RICHE EN ACIDE OLÉIQUE

(30) Priority: 12.04.2019 EP 19168973
(43) Date of publication of application: 16.02.2022
(73) Proprietor: Unilever IP Holdings B.V., 3013 AL Rotterdam (NL)
(72) Inventor: ERMACORA, Alessia, 6708 WH Wageningen (NL); SILVA PAES, Sabrina, 6708 WH Wageningen (NL)
(74) Representative: Fijnvandraat, Arnoldus
(86) International application number: PCT/EP2020/058003
(87) International publication number: WO 2020/207780

(56) References cited:
- EP-A1- 1 217 983
- EP-A1- 3 459 365
- WO-A1-2019/057407
- KR-B1- 101 924 066
- SÁNCHES-SALCEDO ET AL: "(Poly)phenolic compounds and antioxidant activity of white (Morus alba) and black (Morus nigra) mulberry leaves: Their potential for new products rich in phytochemicals", JOURNAL OF FUNCTIONAL FOODS,, vol. 18, 1 January 2015 (2015-01-01), pages 1039-1046, XP002782855, DOI: 10.1016/J.JFF.2015.03.053
- AYSEL SÝVACÝ ET AL: "Seasonal changes in antioxidant activity, total phenolic and anthocyanin constituent of the stems of two Morus species (Morus alba L. and Morus nigra L.)", PLANT GROWTH REGULATION, KLUWER ACADEMIC PUBLISHERS, DO, vol. 44, no. 3, 1 November 2004 (2004-11-01), pages 251-256, XP019243571, ISSN: 1573-5087, DOI: 10.1007/S10725-004-4500-4

## Description

### Field of the invention

The present invention relates to an oil in water emulsified food composition comprising high oleic oil and a process for manufacturing the same. It further relates to the use of specific sources of organic acid to reduce the off-flavor formation in an oil-in-water emulsified food composition comprising high oleic oil.

### Background of the invention

Oil-in-water emulsions, such as mayonnaise, are prone to oxidation of the oil component. Especially in compositions with a relatively high oil level, the effects of such oil oxidation become more pronounced and may involve change in color and rancidity taste. A means to counter this development is the addition of ethylenediaminetetraacetic acid (EDTA).

EDTA is considered an undesired ingredient in food compositions, as it can be perceived by some consumers as an unnatural or unhealthy chemical. There is a desire to omit EDTA from food compositions such as mayonnaise, while maintaining the fresh taste character.

When oils with a higher oleic acid fraction are used, *i.e.* which comprise a relatively high level of oleic acid compared to the normal oil variant, an increased oil oxidative stability is achieved, as for example observed by the reduced oxygen consumption over time, which can be even comparable to when EDTA is used. The use of these oils comprising a high oleic acid fraction is attended with a specific problem of its own. After a short period of storage, normally less than a month, a specific unpleasant off-taste is developed, which significantly reduced the acceptance of the water-in-oil emulsified food composition. Emulsified products comprising a high level of oil containing high oleic fatty acids (high oleic oils) are known. The off taste is taken for granted or masked by flavor additions. WO2019057407 relates to compositions containing vegetable oils and an anti-oxidant system to prevent oxidation of the triglycerides in the vegetable oil in food products upon storage. The antioxidant system should not give an undesired colour, and neither an undesired taste, to a food composition.

### Summary of the invention

A need remains for an oil-in-water emulsion that is stable against oxidation while not relying on EDTA, and wherein no off-taste is developed during storage, at least wherein the off taste is reduced.

Surprisingly, this challenge was met by an oil-in-water emulsified food composition comprising:
- Water,
- Vegetable oil, comprising C18:1 and C18:2 fatty acids, in an amount, based on the weight of the vegetable oil, of:
   ∘ C18:1 from 35 to 95 wt%, preferably from 40 to 90 wt%,
   ∘ C18:2 from 1 to 50 wt%, preferably of from 5 to 45 wt%,
      wherein the vegetable oil comprises a high oleic oil, which is defined as an oil wherein the fatty acid composition comprises more than 70 wt% of oleic acid, based on the weight of the high oleic oil, wherein the composition does not comprise olive oil, • acetic acid,
- 0.0007 to 0.7 wt%, based on the weight of the composition, of one or more organic acids other than acetic acid,
- 0.0001 to 0.3 wt%, based on the weight of the composition, of one or more amino acids,
- 0.00007 to 0.5 wt%, based on the weight of the composition, of one or more phenolic compounds, expressed as gallic acid equivalents,

wherein the ratio of the weight of total organic acids other than acetic acid to the weight of the total of organic acids is from 0.5 to 60 %, and
wherein the weight ratio of the total of amino acids to the total organic acids is from 0.05 to 20%.

In a further aspect, the invention relates to a process for manufacturing an oil-in-water emulsified food composition according to the invention, the process comprising the steps of:
a) Providing a water phase comprising
   - Water,
   - acetic acid,
   - One or more organic acids other than acetic acid, wherein the ratio of the weight of total organic acids other than acetic acid to the weight of the total of organic acids in the water phase is from 0.5 to 60 %,
   - one or more amino acids, wherein the weight ratio of the total of amino acids to the total organic acids in the water phase is from 0.05 to 20 %,
   - one or more phenolic compounds, wherein the weight ratio of the phenolic compounds, expressed as gallic acid equivalents, to total organic acids in the water phase is from 0.1 to 50 %,
b) Providing an oil phase comprising vegetable oil comprising C18:1 and C18:2 fatty acids, in an amount, based on the weight of the vegetable oil, of:
   - C18:1 from 35 to 95 wt%, preferably from 40 to 90 wt%,
   - C18:2 from 1 to 50 wt%, preferably of from 5 to 45 wt%, wherein the vegetable oil comprises a high oleic oil, which is defined as an oil wherein the fatty acid composition comprises more than 70 wt% of oleic acid, based on the weight of the high oleic oil, wherein the composition does not comprise olive oil,
c) Mixing the oil phase and the water phase to provide an emulsified food composition comprising:
   - 0.0007 to 0.7 wt%, based on the weight of the final composition, of one or more organic acids other than acetic acids,
   - 0.0001 to 0.3 wt%, based on the weight of the final composition, of one or more amino acids,
   - 0.00007 to 0.5 wt% , based on the weight of the final composition, of one or more phenolic compounds, expressed as gallic acid equivalents.

In a further aspect, the invention relates to the use of a source of organic acids in an oil-in-water emulsifier food composition, the source of organic acids comprising:
- Acetic acid,
- One or more organic acids other than acetic acid, wherein the ratio of the weight of total organic acids other than acetic acid to the weight of the total of organic acids in the source of organic acids is from 0.5 to 60 %, and
- One or more amino acids, wherein the weight ratio of the total of amino acids to the total organic acids in the source of organic acids is from 0.05 to 20 %,
- One or more phenolic compounds, wherein the weight ratio of the phenolic compounds, expressed as gallic acid equivalents, to total organic acids in the water phase is from 0.1 to 50 %,
in such an amount that the food composition comprises:
- 0.0007 to 0.7 wt%, based on the weight of the final food composition, of one or more organic acids other than acetic acids,
- 0.0001 to 0.3 wt%, based on the weight of the final composition, of one or more amino acids,
- 0.00007 to 0.5 wt%, based on the weight of the final composition, of one or more phenolic compounds, expressed as gallic acid equivalents,
   to reduce off-taste in the oil-in-water emulsified food composition, wherein the emulsified food composition comprises vegetable oil and water, wherein the vegetable oil comprises C18:1 and C18:2 fatty acids, in an amount, based on the weight of the vegetable oil, of:
- C18:1 from 35 to 95 wt%, preferably from 40 to 90 wt%,
- C18:2 from 1 to 50 wt%, preferably of from 5 to 45 wt.%, wherein the vegetable oil comprises a high oleic oil, which is defined as an oil wherein the fatty acid composition comprises more than 70 wt% of oleic acid, based on the weight of the high oleic oil, wherein the composition does not comprise olive oil.

### Detailed description of the invention

All percentages, unless otherwise stated, refer to the percentage by weight (wt%). "Weight ratio" means that the concentration of a first (class of) compound(s) is divided by the concentration of a second (class of) compound(s), and multiplied by 100 in order to arrive at a percentage.

"Spoonable" means that a composition is semi-solid but not free-flowing on a time scale typical for eating a meal, meaning not free-flowing within a time period of an hour. A sample of such substance is able to be dipped with a spoon from a container containing the composition.

Except in the operating and comparative examples, or where otherwise explicitly indicated, all numbers in this description indicating amounts or ratios of material or conditions of reaction, physical properties of materials and/or use are to be understood as modified by the word "about".

Features described in the context of one aspect of the invention can be applied in another aspect of the invention.

The invention provides a food composition as defined in the first aspect above.

### Emulsion

The composition of the invention is in the form of an oil-in-water emulsion. Examples of oil-in-water emulsions encompassed by the present invention include emulsified sauces, such as mayonnaise, and dressings, such as salad dressings and vinaigrettes.

Preferably, the food composition is an emulsified sauce or dressing, preferably a mayonnaise or salad dressing and most preferably is a mayonnaise. Generally, a mayonnaise is spoonable, while a salad dressing is pourable.

In the context of the present invention, the preferred oil-in-water emulsion may be stable as an emulsion during a time period of for example less than one hour (like for example some vinaigrettes). It is preferred that (after emulsifying) the emulsion is stable for more than one hour, preferably during a time period of half a year or more (like for example some mayonnaises).

Mayonnaise is generally known as a thick, creamy sauce that can be used as a condiment with other foods. Mayonnaise is a stable water-continuous emulsion of typically vegetable oil, egg yolk and either vinegar or lemon juice. In many countries the term mayonnaise may only be used in case the emulsion conforms to the "standard of identity", which defines the composition of a mayonnaise. For example, the standard of identity may define a minimum oil level, and a minimum egg yolk amount. Also, mayonnaise-like products having oil levels lower than defined in a standard of identity or not containing egg yolk can be considered to be mayonnaises in the context of the present invention. This kind of products may contain thickeners like starch to stabilise the aqueous phase. Mayonnaises may vary in colour, and are generally white, cream-coloured, or pale yellow. The texture may range from light creamy to thick. Generally, mayonnaise is spoonable. In the context of the present invention "mayonnaise" includes such mayonnaise and 'mayonnaise-like' emulsions with vegetable oil levels ranging from 5% to 85% by weight of the product. Mayonnaises in the context of the present invention do not necessarily need to conform to a standard of identity in any country.

### Oil

The term "oil" as used herein refers to lipids selected from triglycerides, diglycerides, monoglycerides and combinations thereof. The term "vegetable oil" is not limited to one specific oil, but can comprise one or more specific oils. Preferably the oil in the context of this invention, the vegetable oil, comprises at least 90 wt% of triglycerides, more preferably at least 95 wt%. Preferably the oil contains less than 20 wt% of solid fat at 5°C, preferably less than 10 wt% solid fat at 5 °C. More preferred the oil is free from solid fat at 5°C. Most preferred the oil is liquid at 5°C. Preferred oils for use in the context of this invention are vegetable oils which are liquid at 5°C. In the context of this invention, algae oil is considered a vegetable oil. Preferably the vegetable oil comprises, more preferably is, oil selected from the group consisting of sunflower oil, rapeseed oil, soybean oil, algae oil, and combinations of these oils. Most preferably, the vegetable oil is selected from soybean oil, sunflower seed oil, rape seed oil and mixtures thereof. Therefore, preferably the vegetable oil is an edible oil. The oil preferably comprises monounsaturated and/or polyunsaturated fatty acids. The monounsaturated fatty acids as comprised in the oil preferably comprise oleic acid. The polyunsaturated fatty acids as comprised in the oil preferably comprise linoleic acid and linolenic acid.

The amount of saturated fatty acids could preferably be from 2 to 15 wt%, more preferably of from 3 to 12 wt%, even more preferably of from 5 to 11 wt% based on the total weight of the vegetable oil. It can be preferred to be less than 15 wt%, more preferably less than 12 wt%, even more preferably less than 11 wt%, even more preferably less than 10 wt%, based on the total weight of the vegetable oil. The amount could be preferably more than 2 wt%, more preferably more than 3 wt%, even more preferably more than 5 wt%, based on the total weight of the vegetable oil.

The vegetable oil does not comprise olive oil.

Preferably the concentration of vegetable oil ranges from 5 to 85 wt%, preferably from 10 wt% to 80 wt%, more preferably of from 10 to 78 wt%, even more preferably of from 15 to 75 wt%, even more preferably 25 to 70 wt%, based on the weight of the composition. Preferably the amount of vegetable oil is at least 5 wt%, more preferably at least 15 wt%, preferably at least 25 wt%. Preferably the concentration of vegetable oil is maximally 80 wt%, more preferably at most 78 wt%, even more preferably at most 75 wt%, preferably maximally 70 wt%. Especially if for example a mayonnaise with less oil is preferred, an amount of vegetable oil is preferred of from 10 to 35 wt%, Especially if a mayonnaise with a higher oil content is preferred, an amount of vegetable oil is preferred of from 40 to 75 wt%, based on the weight of the composition. Any combination of ranges using these mentioned end points are considered to be part of the invention as well.

### High oleic oil

In the context of the present invention, vegetable oil is used which comprises fatty acids with one (C18:1) unsaturated carbon atom and fatty acids with two (C18:2) unsaturated carbon atoms. C18:1 and C18:2 fatty acids are present in the following amounts, based on the weight of the total amount of vegetable oil:
- C18:1 from 35 to 95 wt%, preferably from 40 to 90 wt%,
- C18:2 from 1 to 50 wt%, preferably of from 5 to 45 wt%.

If C18:3 fatty acids are present, they are present in an amount, based on the weight of the total amount of vegetable oil, of preferably less than 9 wt%, more preferably less than 8 wt%, even more preferably less than 7 wt%, even more preferably less than 6 wt%, even more preferably less than 5 wt%, based on the weight of the vegetable oil. It may be preferred that the C18:3 fatty acid is present in an amount of more than 0.05 wt%, more preferably of more than 0.1 wt%, even more preferably of more than 0.2 wt%, even more preferably more than 0.5 wt%, and still even more preferably of more than 1 wt%, based on the weight of the vegetable oil. C18:3 fatty acid may preferably be present in an amount of from 0 to 9 wt%, preferably of from 0.05 to 8 wt%, even more preferably of from 0.1 to 7 wt%, even more preferably of from 0.2 to 6 wt%, even more preferably of from 0.5 to 5 wt%, based on the weight of the vegetable oil.

The total amount of mono-, di- and tri-unsaturated C18 fatty acid (i.e. C18:1, C18:2 and 18:3) is preferably from 75 to 96 wt%, more preferably of from 80 to 95 wt%, even more preferably of from 85 to 93 wt%, based on the total weight of the vegetable oil.

It is preferred, that the total vegetable oil in the composition according to the invention comprises from 1 to 50 wt%, more preferably of from 5 to 48 wt%, even more preferably of from 7 to 45 wt% C18:2 and C18:3 (combined), based on the total weight of the vegetable oil.

The total vegetable oil in the composition comprises C18:1 fatty acids which are preferably present in an amount of more than 35 wt%, more preferably more than 40 wt%, even more preferably more than 45 wt%, even more preferably more than 50 wt%, even more preferably more than 60 wt%, based on the weight of the vegetable oil. The total vegetable oil in the composition of the invention preferably comprises less than 95 wt%, more preferably less than 90 wt%, even more preferably less than 85 wt%, even more preferably less than 80 wt%, even more preferably less than 75 wt% of C18:1 fatty acid, based on the weight of the vegetable oil. C18:1 fatty acid is preferably present in an amount of from 35 to 95 wt%, preferably 40 to 90 wt%, most preferably 45 wt% to 85 wt%, or even 50 to 75 wt%, based on the weight of the vegetable oil.

The total vegetable oil in the composition comprises C18:2, which is preferably present in an amount of from 1 wt% to 50 wt%, preferably from 5 to 45 wt%, based on the weight of the vegetable oil.

It may be preferred that the composition comprises C18:1 in an amount of from 40 to 90 wt% and C18:2 fatty acid in an amount of from 5 to 45 wt%, based on the weight of the vegetable oil. It may be preferred that the composition comprises C18:1 in an amount of from 40 to 90 wt% and C18:2 fatty acid in an amount of from 5 to 45 wt%, and C18:3 in an amount of 0.05 to 8 wt%, based on the weight of the vegetable oil.

The vegetable oil in the invention comprises high oleic oil.

High oleic oil is defined as oil with a very high content of oleic acid (C18:1). Oleic acid is a monounsaturated omega-9 fatty acid. It is preferred that the vegetable oil contains more than 70 wt% of oleic acid in its fatty acid composition, preferably more than 75 wt%. The vegetable oil comprises a high oleic oil, defined as an oil wherein the fatty acid composition comprises more than 70 wt% of oleic acid, based on the weight of the high oleic oil. Not all vegetable oil needs to be a high oleic oil. It may be preferred, that the vegetable oil further comprises oil which is not a high oleic oil. High oleic oil is preferably present in the composition of the invention in an amount of from 20 wt% to 100 wt%, preferably of from 20 to 80 wt%, more preferably of from 50 to 80 wt% based on the weight of the total vegetable oil in the composition. High oleic oil is preferably present in an amount of more than 25 wt%, more preferably more than 40 wt%, based on the weight of the composition.

Such a high oleic oil preferably is high oleic sunflower oil, high oleic rape seed oil, high oleic soybean oil, high oleic algae oil, or a mixture thereof.

### Water

The composition of the invention comprises water. The total amount of water is preferably of from 15 to 95 wt%, preferably of from 17 to 90 wt%. It can be preferred that water is present in an amount of from 20 to 85 wt%, preferably in an amount of from 22 to 80 wt%. Preferably the amount of water is at least 15 wt%, more preferably at least 17wt%, even more preferably at least 20wt%, more preferably at least 22 wt%, even more preferably at least 40 wt% or even 55 wt%. Preferably the concentration of water is maximally 95 wt%, more preferably at most 90 wt%, even more preferably at most 85 wt% more preferably at most 80 wt% even more preferably at most more 75 wt%. Any combination of ranges using these end points are considered to be part of the invention as well.

### Emulsifier

Preferably the composition of the invention comprises an oil-in-water emulsifier. The emulsifier serves to disperse oil droplets in the continuous aqueous phase of an oil-in-water emulsion. Preferably the emulsifier comprises an oil-in-water emulsifier originating from egg, preferably from egg yolk. Preferably the composition comprises egg yolk. This suitably serves as an ingredient which also provides the oil-in-water emulsifier. The presence of egg yolk may be beneficial for taste, emulsification and/or stability of the oil droplets in the composition of the invention. Egg yolk contains phospholipids, which act as emulsifier for the oil droplets.

Preferably the concentration of egg yolk in the composition of the invention ranges from 1 wt% to 10 wt%, by weight of the composition, more preferred from 2 wt% to 8 wt%, by weight of the composition, even more preferably from 2.5 wt% to 6 wt%, by weight of the composition. The egg yolk may be added as egg yolk component, meaning largely without egg white. Alternatively, the composition may also contain whole egg, containing both egg white and egg yolk. The total amount of egg yolk in the composition of the invention includes egg yolk that may be present as part of whole egg. Preferably, the concentration of phospholipids originating from egg yolk ranges from 0.08 wt% to 0.8 wt%, preferably from 0.2 wt% to 0.5 wt%, by weight of the food composition.

Alternatively, or in addition to egg-derived emulsifier, the composition of the invention may comprise an oil-in-water emulsifier that does not originate from egg or egg yolk. Preferably such oil-in-water emulsifier is from plant or botanical origin, and may be used native or modified. This way a vegan oil-in-water emulsifier can be created without ingredients from animal origin. Preferably the oil-in-water emulsifier comprises starch sodium octenyl succinate (European food additive E1450). This emulsifier is available commercially as for example N-creamer 46, ex Ingredion Inc. (Westchester, IL, USA). Another preferred emulsifier from botanical origin is legume protein.

### pH

The composition of the invention preferably has a pH ranging from 2.5 to 5, preferably ranging from 2.5 to 4.

### Acetic acid, organic acids other than acetic acid, amino acids, phenolic compounds

The composition of the invention further comprises acetic acid, one or more organic acids other than acetic acid, one or more amino acids and phenolic compounds. It is preferred, that the acetic acid and the one or more other organic acids are provided to the composition by a source of organic acid. Therefore, the composition of the invention preferably comprises a source of organic acid. Such a source of organic acid preferably comprises acetic acid and one or more organic acids other than acetic acid.

Accordingly, in a preferred aspect, the invention relates to an oil-in-water emulsified food composition comprising:
- Water,
- Vegetable oil, comprising C18:1 and C18:2 fatty acids, in an amount, based on the weight of the vegetable oil, of:
   ▪ C18:1 from 35 to 95 wt%, preferably from 40 to 90 wt%,
   ▪ C18:2 from 1 to 50 wt%, preferably of from 5 to 45 wt%,
- A source of organic acids comprising
   ▪ acetic acid and
   ▪ 0.0007 to 0.7 wt%, based on the weight of the composition, of one or more organic acids other than acetic acid,
- 0.0001 to 0.3 wt%, based on the weight of the composition, of one or more amino acids,
- 0.00007 to 0.5 wt%, based on the weight of the composition, of one or more phenolic compounds, expressed as gallic acid equivalents,

wherein the ratio of the weight of total organic acids other than acetic acid to the weight of the total of organic acids in the composition, preferably in the source of organic acids, is from 0.5 to 60 %, and
wherein the weight ratio of the total of amino acids to the total organic acids in the composition is from 0.05 to 20 %.

In an even more preferred situation, the composition of the invention comprises a source of organic acetic acid which comprises the acetic acid, the one or more organic acids other than acetic acid, the one or more amino acids and the one or more phenolic compounds. The weight ratio of the total amino acids to the total organic acids in the source of organic acids is from 0.05 to 20%. Accordingly, in this more preferred aspect, the invention relates to an oil-in-water emulsified food composition comprising:
- Water,
- Vegetable oil, comprising C18:1 and C18:2 fatty acids, in an amount, based on the weight of the vegetable oil, of:
   ▪ C18:1 from 35 to 95 wt%, preferably from 40 to 90 wt%,
   ▪ C18:2 from 1 to 50 wt%, preferably of from 5 to 45 wt%,
- A source of organic acids comprising:
   ▪ acetic acid and
   ▪ 0.0007 to 0.7 wt%, based on the weight of the composition, of one or more organic acids other than acetic acid,
   ▪ 0.0001 to 0.3 wt%, based on the weight of the composition, of one or more amino acids,
   ▪ 0.00007 to 0.5 wt%, based on the weight of the composition, of one or more phenolic compounds, expressed as gallic acid equivalents,

wherein the ratio of the weight of total organic acids other than acetic acid to the weight of the total of organic acids in the composition, preferably in the source of organic acids, is from 0.5 to 60 %, and
wherein the weight ratio of the total of amino acids to the total organic acids in the composition, preferably in the source of organic acids, is from 0.05 to 20 %.

### Organic acid

The composition, preferably the source of organic acids comprised by the composition, comprises acetic acid and additionally one or more other organic acids which are preferably selected from citric acid, malic acid, lactic acid, and succinic acid, formic acid, propionic acid and mixtures thereof. The acids as described in this specification include their corresponding salts which are in equilibrium with the acids (acetates, citrates, malates, lactates, succinates, etc.). Thus, in case a concentration of an acid is provided, then this concentration refers to total concentration of the acid and its corresponding salt. The composition comprises one or more organic acids other than acetic acid at a total concentration ranging from 0.0007wt% to 0.7wt%, preferably from 0.0011wt% to 0.65wt%, even more preferably of from 0.0022 to 0.5 wt%, even more preferably of from 0.007 to 0.4 wt%, based on the weight of the composition.

Acetic acid is preferably present in an amount of more than 50 wt%, more preferably more than 80 wt%, even more preferably more than 90 wt%, even more preferably more than 95 wt% based on the weight of the total amount of acid in the composition. Preferably the composition of the invention has a total titratable acidity ranging from 0.03 wt% to 3 wt%, expressed as acetic acid, preferably from 0.05 wt% to 2 wt%, preferably from 0.1 wt% to 1 wt%.

As indicated herein before, the composition of the invention comprises one or more organic acids other than acetic acid. Preferably the weight ratio of the total of one or more organic acids other than acetic acid to total organic acids in the source of organic acids ranges from 1% to 30%, preferably from 1.5% to 25%, more preferred from 2% to 20%. The organic acids other than acetic acid are preferably at least partly provided, more preferably are all provided, to the composition by way of being a constituent of the source of organic acids. Preferably the source of organic acids comprises citric acid at an amount of maximally 50 wt% by weight of the total amount of organic acids in the source of organic acids. Preferably the source of organic acids comprises citric acid and malic acid and the weight ratio between citric acid and malic acid to total organic acids in the source of organic acids ranges from 0.2% to 50%. Preferably the weight ratio between citric acid and malic acid to total organic acids in the source of organic acids ranges from 1 to 35%, more preferred from 1.5% to 15%, most preferred from 2% to 10%.

### Amino acid

The composition of the invention, preferably the source of organic acids comprised by the composition, comprises one or more amino acids at a concentration ranging from 0.0001wt% to 0.3wt%, by weight of the composition. In the context of this invention, 'amino acid' is not part of the denominator 'organic acid', or 'the total organic acid', as the skilled person understands, but is calculated separately. Preferably at least part, more preferably all, of these amino acids are present in the source of organic acids. Preferably at least part, more preferably all, of these amino acids are present, in the source of organic acids before mixing that source with the other ingredients of the composition of the invention. If preferred, they may be added, all or partly, to the composition independently from the source of organic acids. Preferably the composition comprises one or more amino acids at a concentration ranging from 0.0005wt% to 0.2wt%, by weight of the composition. In the context of the present invention, "amino acids" refers to "free amino acids", meaning amino acids not bound in a protein or a peptide. Preferred amino acids comprise alanine, asparagine, aspartic acid, proline, glutamic acid, leucine, isoleucine, valine, and glycine. The term "amino acid" may refer to an amino acid and its corresponding salts, which may be in equilibrium with the amino acid.

The weight ratio of the one or more amino acids to total organic acids in the composition, preferably in the source of organic acid, ranges from 0.05% to 20%, preferably of from 0.2% to 18%, more preferably from 0.5% to 15%. A preferred amino acid present in the composition, preferably in the source of organic acids, is asparagine. Preferably the weight ratio of asparagine to total organic acids in the composition, preferably in the source of organic acid, ranges from 0.2% to 10%.

The level of amino acids, and organic acids, in a composition can be analysed spectroscopically (¹H-NMR).

### Phenolic compounds

The composition of the invention comprises phenolic compounds at a concentration ranging from 0.00007 wt% to 0.5 wt%, based on the weight of the composition, expressed as gallic acid equivalents. Preferably these phenolic compounds are present, e.g. naturally present, in the source of organic acids, but they may also be added to the composition independently from the source of organic acids. Preferably the composition comprises one or more phenolic compounds at a concentration ranging from 0.00015 wt% to 0.07 wt%, based on the weight of the composition, expressed as gallic acid equivalents (GAE).

The amount of the phenolic compounds, expressed as gallic acid equivalents (GAE), is preferably from 100 to 5000 GAE micrograms/mL of source of organic acids, preferably 200 to 2500 GAE micrograms/mL, even more preferably 300 to 2000 GAE micrograms/mL and could even be 300 to 1500 GAE micrograms/mL of source of organic acids. If the source of organic acid is a vinegar, the amount of phenolic compounds in the vinegar is preferably from 100 to 5000 GAE micrograms/mL of vinegar, preferably 200 to 2500 GAE micrograms/mL of vinegar, even more preferably 300 to 2000 GAE micrograms/mL vinegar. It may be preferred that the source of organic acid is cherry vinegar, plum vinegar, tomato vinegar, apple cider vinegar, mango vinegar, raspberry vinegar, apricot vinegar, pear vinegar, apple cider balsamic vinegar, or a mixture thereof, wherein the amount of phenolic compounds is from 100 to 5000 GAE micrograms/mL of vinegar, preferably 200 to 2500 GAE micrograms/mL of vinegar, even more preferably 300 to 2000 GAE micrograms/mL vinegar.

It may be preferred that the source of organic acid is cherry vinegar, plum vinegar, tomato vinegar, apple cider vinegar, mango vinegar, raspberry vinegar, apricot vinegar, pear vinegar or a mixture thereof, preferably plum vinegar, apple cider vinegar, raspberry vinegar, apricot vinegar or a mixture thereof, wherein the amount of phenolic compounds is from 100 to 5000 GAE micrograms/mL of vinegar, preferably 200 to 2500 GAE micrograms/mL of vinegar, even more preferably 300 to 2000 GAE micrograms/mL vinegar, even more preferably of from 300 to 1500 GAE micrograms/mL vinegar.

The phenolic compounds, expressed as gallic acid equivalents, in the composition, preferably in the source of organic acid, is preferably present in a weight ratio of the phenolic compounds, expressed as gallic acid equivalents, to the weight of the total organic acid in the composition, or in the source of organic acid, respectively, of from 0.1 to 50%, preferably 0.2 to 25%, more preferably 0.3 to 8%.

A common method to determine the phenolic compounds concentration of a sample, is the concentration in "gallic acid equivalents" (GAE). Whenever reference is made herein to "gallic acid equivalents" what is meant is the amount of gallic acid equivalents as determined by the Folin-Ciocalteu assay. Gallic acid (3,4,5-trihydroxybenzoic acid) is the phenolic acid that is used as a standard for determining the phenol content of various analyses by the Folin-Ciocalteu assay (see V.L. Singleton et al., Analysis of total phenols and other oxidation substrates and antioxidants by means of Folin-Ciocalteu reagent, Methods in Enzymology 299, 152-178, 1999).

The dry matter content of the source of organic acids ranges preferably of from 0.005 wt% to 99 wt%, based on the weight of the source of organic acid. Preferably the dry matter content of the source of organic acids ranges from 0.1 wt% to 50 wt%, based on the weight of the source of organic acids. Preferably the dry matter content of the source of organic acids is at least 3 wt% based on the weight of the source of organic acid.

Preferably, the source of organic acid has an absorbance at a wavelength of 420 nm ranging from 0.01 to 3. This limits the darkness of the source of organic acids: if they are too dark, then the absorbance at 420 nm will be higher than 3. For example, a balsamic vinegar made from grapes generally has an absorbance at 420 nm which is higher than 3. Therefore, this limit effectively excludes dark coloured balsamic vinegars prepared from grape. More preferably the source of organic acids has an absorbance at a wavelength of 280 nm ranging from 1 to 3.

The source of organic acid preferably comprises:
a) acetic acid,
b) organic acids other than acetic acid, wherein the ratio of the weight of total organic acids other than acetic acid to the weight of the total of organic acids in the source of organic acid is from 0.5 to 60 %,
c) amino acids, wherein the weight ratio of the total of amino acids to the total organic acids in the source of organic acid is from 0.05 to 20 %,
d) phenolic compounds, wherein the weight ratio of the phenolic compounds, expressed as gallic acid equivalents, to the weight of the total organic acid in the source of organic acid is 0.1 to 50%, preferably 0.2 to 25%, more preferably 0.3 to 8%.

The amount of total organic acids in the source of organic acids preferably ranges from 0.2 to 35 wt%, more preferably of from 0.5 to 25 wt%, even more preferably of from 1 to 15 wt%, most preferably of from 1.5 to 10 wt%, based on the weight of the source of organic acids. (calculated as weight of total organic acid /weight of the source of organic acid, preferably weight of vinegar, x 100%).

The amount of total organic acid based on the dry weight of the source or organic acids, preferably based on the dry weight of vinegar, in case the source of organic acid is a vinegar, is preferably of 30 to 85 wt% (e.g. TOA/"dry source of organic acid (e.g. vinegar) wt"*100) based on the weight of the source of organic acid.

The source of organic acids preferably comprises, more preferably is, one or more vinegars, e.g. prepared from common products of agricultural origin. Commercial vinegars may be used in the present invention as a source of organic acid, if the requirements as mentioned above are met. Indeed, the organic acid, amino acid and phenolic compounds, in the amounts as claimed, thereby can function as markers to select vinegars that are effective in the context of the present invention. It is in the normal skill of the artisan to determine the level of organic acids, amino acids and phenolic compounds in a vinegar and/or in the composition. Preferably, the source of organic acids comprises, preferably is, one or more vinegars selected from cherry vinegar, plum vinegar, tomato vinegar, apple cider vinegar, mango vinegar, raspberry vinegar, apricot vinegar, and pear vinegar. More preferably, the source of organic acids comprises, preferably is, one or more vinegars selected from apricot vinegar, apple cider vinegar, plum vinegar, raspberry vinegar and mixtures thereof. A preferred vinegar as source of organic acids is apple cider vinegar. Another source of organic acids that may be preferred is balsamic apple cider vinegar, for example as supplied by Vinagrerias Riojanas (Logroño, La Rioja, Spain).

It may be preferred that the source of organic acids does not originate from grape. Grape is the fruit or berry of plants of the genus *Vitis,* in particular from the species *Vitis vinifera.*

The source of organic acids may contain salts, like for example kitchen salt (NaCI), although high salt levels are not preferred. The concentration of NaCl preferably is lower than 10 wt%, more preferably less than 5 wt%, more preferably less than 3 wt%, by weight of the source of organic acids. Most preferably the NaCl concentration in the source of organic acid is the NaCl concentration which may be naturally present in the source of organic acid, meaning no NaCl is added to the source of organic acid.

### Other ingredients

The composition of the invention preferably contains additionally other ingredients than already specifically mentioned in here. Preferably the composition contains plant material in the form of herbs and/or spices. In case such ingredients are present in the composition, then generally their total concentration is at least 0.1wt%, and preferably maximally 10wt%, preferably maximally 5wt%., based on the weight of the composition.

The composition of the invention may comprise sugar, but high levels are not desired. Sugar may be present to an amount of from 0.1 to 15 wt%, preferably of from 0.3 to 12 wt%, even more preferably of from 0.4 to 10 wt%, most preferably of from 0.5 to 8 wt%, based on the weight of the composition.

Total alkaline metal salt, for example sodium chloride, may be present to an extent of from 0.1 to 5 wt%, preferably from 0.15 to 4 wt%, or more preferably of from 0.2 to 3 wt%, based on the weight of the composition.

The food composition of the invention may comprise a thickener. It may be preferred that the food composition comprises a thickener such as a hydrocolloid thickener. Therefore, the food composition may preferably comprise starch or gum or mixtures thereof. A preferred gum is xanthan gum. The composition may comprise starch in an amount of from 0.1 to 8 wt%, preferably of from 0.2 to 7 wt%, more preferably of from 0.5 to 6 wt%, or even from 0.5 to 5 wt% can be preferred, based on the weight of the food composition. It is preferred, that when starch is present, or gum, the oil content is between 5 and 72 wt%, preferably of between 8 and 70 wt%, preferably of between 10 and 50 wt% based on the weight of the food composition.

The amount of EDTA which commonly is present in compositions containing vegetable oil can be strongly reduced. Hence, preferably the composition comprises EDTA at a concentration lower than 0.008 wt%, preferably from 0 to 0.007 wt%, preferably lower than 0.005wt%, preferably from 0 to 0.005 wt%, preferably lower than 0.002wt%, preferably from 0 to 0.002 wt% preferably lower than 0.001wt%, preferably from 0 to 0.001 wt%, based on the weight of the composition. Most preferred EDTA is absent from the composition.

The advantage of the composition of the invention is that the malodor of high oleic oil upon storage is strongly reduced as compared to compositions without the addition of the specific combination of organic acid, amino acid and phenolic compound, preferably added in a source of organic acids, as defined herein.

### Method for preparation of composition

The compositions of the invention are prepared by any method commonly known for preparing oil-in-water emulsions. Preferably, by using such method, an oil-in-water emulsion is prepared, wherein the oil droplets have a surface weighted mean diameter D3,3 of preferably less than 20 micrometres, more preferably less than 10 micrometres (see M. Alderliesten, Particle & Particle Systems Characterization 8 (1991) 237-241; for definitions of average diameters).

Accordingly, in a second aspect the present invention relates to a process for manufacturing an oil-in-water emulsified food composition according to the invention, the process comprising the steps of:
a) Providing a water phase comprising:
   - Water,
   - acetic acid and
   - one or more organic acids other than acetic acid, wherein the ratio of the weight of total organic acids other than acetic acid to the weight of the total of organic acids in the water phase is from 0.5 to 60 %, preferably from 1% to 30%, more preferably from 1.5% to 25%, even more preferably from 2% to 20%,
   - one or more amino acids, wherein the weight ratio of the total of amino acids to the total organic acids in the water phase is from 0.05 to 20 %, preferably from 0.2% to 18%, more preferably from 0.5% to 15%,
   - one or more phenolic compounds wherein the weight ratio of the phenolic compounds, expressed as gallic acid equivalents, to total organic acids in the water phase is from 0.1 to 50 %, preferably of from 0.2 to 25%, more preferably of from 0.3 to 8%,
b) Providing an oil phase comprising vegetable oil comprising C18:1 and C18:2 fatty acids, in an amount, based on the weight of the vegetable oil, of:
   - C18:1 from 35 to 95 wt%, preferably from 40 to 90 wt%,
   - C18:2 from 1 to 50 wt%, preferably of from 5 to 45 wt%,
c) Mixing the oil phase and the water phase to provide an emulsified food composition comprising
   - 0.0007 to 0.7 wt%, based on the weight of the final composition, of one or more organic acids other than acetic acids, preferably 0.0011 to 0.65 wt%, more preferably 0.0022 to 0.5 wt%, even more preferably 0.007 to 0.4 wt%,
   - 0.0001 to 0.3 wt%, based on the weight of the final composition, of one or more amino acids, preferably 0.0005 to 0.2 wt%,
   - 0.00007 to 0.5 wt%, based on the weight of the final composition, of one or more phenolic compounds, expressed as gallic acid equivalents, preferably 0.00015 to 0.07 wt%.

The method of the invention comprising mixing, preferably homogenisation, of a mixture of oil and water. This results in an oil-in-water emulsion. Technology to prepare oil-in-water emulsions is known in the art, e.g. for mayonnaise making. Preferably, water and water-soluble ingredients are provided in step a). A source of acetic and organic acid can be pre-added to the water in step a).

Preferably, the water phase comprises water and a source of organic acids. In this situation, the source of organic acids is combined with the water in step a). The source of organic acids comprises acetic acid and one or more organic acids other than acetic acid.

Preferably, the invention relates to a process for manufacturing an oil-in-water emulsified food composition according to the invention, the process comprising the steps of:
a. Providing a water phase comprising:
   - water and,
   - a source of organic acids comprising:
      i. acetic acid and
      ii. one or more organic acids other than acetic acid, wherein the ratio of the weight of total organic acids other than acetic acid to the weight of the total of organic acids in the source of organic acids is from 0.5 to 60 %, preferably from 1% to 30%, more preferably from 1.5% to 25%, even more preferably from 2% to 20%,
   - one or more amino acids, wherein the weight ratio of the total of amino acids to the total organic acids in the water phase is from 0.05 to 20 %, preferably from 0.2% to 18%, more preferably from 0.5% to 15%,
   - one or more phenolic compounds, wherein the weight ratio of the phenolic compounds, expressed as gallic acid equivalents, to total organic acids in the water phase is from 0.1 to 50 %, preferably of from 0.2 to 25%, more preferably of from 0.3 to 8%.
b. Providing an oil phase comprising vegetable oil comprising C18:1 and C18:2 fatty acids, in an amount, based on the weight of the vegetable oil, of:
   - C18:1 from 35 to 95 wt%, preferably from 40 to 90 wt%,
   - C18:2 from 1 to 50 wt%, preferably of from 5 to 45 wt%,
c. Mixing the oil and the water phase to provide an emulsified food composition comprising:
   - 0.0007 to 0.7 wt%, based on the weight of the final composition, of one or more organic acids other than acetic acids, preferably 0.0011 to 0.65 wt%, more preferably 0.0022 to 0.5 wt%, even more preferably 0.007 to 0.4 wt%,
   - 0.0001 to 0.3 wt%, based on the weight of the final composition, of one or more amino acids, preferably 0.0005 to 0.2 wt%,
   - 0.00007 to 0.5 wt%, based on the weight of the final composition, of one or more phenolic compounds, expressed as gallic acid equivalents, preferably 0.00015 to 0.07 wt%.

It is most preferred, if the acetic acid, the one or more organic acids other than acetic acid, the one or more amino acids and the one or more phenolic compound are present in the source of organic acids and are added via the source of organic acids.

Preferably, the invention relates to a process for manufacturing an oil-in-water emulsified food composition according to the invention, the process comprising the steps of:
a. Providing a water phase comprising
   - water
   - a source of organic acid, wherein the source of organic aid comprises:
      i. acetic acid,
      ii. one or more organic acids other than acetic acid, wherein the ratio of the weight of total organic acids other than acetic acid to the weight of the total of organic acids in the source of organic acid is from 0.5 to 60 %, preferably from 1% to 30%, more preferably from 1.5% to 25%, even more preferably from 2% to 20%,
      iii. amino acids, wherein the weight ratio of the total of amino acids to the total organic acids in the source of organic acid is from 0.05 to 20 %, preferably from 0.2% to 18%, more preferably from 0.5% to 15%,
      iv. phenolic compounds, wherein the weight ratio of the phenolic compounds, expressed as gallic acid equivalents, to total organic acids in the source of organic acids is from 0.1 to 50 %, preferably of from 0.2 to 25%, more preferably of from 0.3 to 8%.
b. Providing an oil phase comprising vegetable oil comprising C18:1 and C18:2 fatty acids, in an amount, based on the weight of the vegetable oil, of:
   - C18:1 from 35 to 95 wt%, preferably from 40 to 90 wt%,
   - C18:2 from 1 to 50 wt%, preferably of from 5 to 45 wt%,
c. Mixing the oil phase and the water phase to provide an emulsified food composition, to result in a final composition comprising
   - 0.0007 to 0.7 wt%, based on the weight of the final composition, of one or more organic acids other than acetic acids, preferably 0.0011 to 0.65 wt%, more preferably 0.0022 to 0.5 wt%, even more preferably 0.007 to 0.4 wt%,
   - 0.0001 to 0.3 wt%, based on the weight of the final composition, of one or more amino acids, preferably 0.0005 to 0.2 wt%,
   - 0.00007 to 0.5 wt%, based on the weight of the final composition, of one or more phenolic compounds, expressed as gallic acid equivalents, preferably 0.00015 to 0.07 wt%.

The source of organic acid is preferably vinegar. Hence, the acetic acid and the one or more organic acids other than acetic acid are preferably added by a vinegar, more preferably the acetic acid, the one or more organic acids other than acetic acid, the one or more amino acids and the one or more phenolic compound are added via a vinegar. The water in the composition encompasses the water present in the source of organic acid, preferably vinegar, as the amount of water refers to the total water content of the resulting composition. Vinegar is preferably added and is preferably present in the composition, in an amount of from 1 to 20 wt%, based on the weight of the composition.

This water phase is combined with the oil phase in step b). Vegetable oil is preferably added as high-oleic oil, as described above in relation to the food composition. The vegetable oil can comprise, or preferably, can consist of high oleic oil, as long as the total fatty acid composition of the resulting vegetable oil meets the requirements as claimed in terms of C18:1 and C18:2, and preferably, C18:3 fatty acids. The amount of high oleic oil that is preferably added is as described above in the context of the food composition.

The water phase comprising water, acetic acid, organic acid other than acetic acid, amino acid and phenolic compound is then mixed with the oil phase, preferably by homogenisation or another suitable emulsification process. A colloid mill could be used to achieve this. Preferably an oil-in-water emulsion results from such mixing, e.g. by homogenisation. In the emulsion, the oil droplets preferably have a volume weighted mean droplet size D3,3 of less than 20 micrometres, preferably less than 10 micrometres.

It is preferred, when in step a) or b) an emulsifier is included, especially in case an emulsion is prepared. The emulsifier is preferably as described above in relation to the product description.

### Use

In a third aspect, the present invention relates to the use of a source of organic acids in an oil in water emulsified food composition, the source of organic acid comprising:
- acetic acid,
- one or more organic acids, wherein the ratio of the weight of total organic acids other than acetic acid to the weight of the total of organic acids in the source of organic acids is from 0.5 to 60 %, preferably from 1% to 30%, more preferably from 1.5% to 25%, even more preferably from 2% to 20%,
- one or more amino acids, wherein the weight ratio of the total of amino acids to the total organic acids in the source of organic acids is from 0.05 to 20 %, preferably from 0.2% to 18%, more preferably from 0.5% to 15%,
- One or more phenolic compounds, wherein the weight ratio of the phenolic compounds, expressed as gallic acid equivalents, to total organic acids in the water phase is from 0.1 to 50 %, preferably of from 0.2 to 25%, more preferably of from 0.3 to 8%,
in such an amount that the oil-in-water emulsified food composition comprises:
- 0.0007 to 0.7 wt%, based on the weight of the final food composition, of one or more organic acids other than acetic acids, preferably 0.0011 to 0.65 wt%, more preferably 0.0022 to 0.5 wt%, even more preferably 0.007 to 0.4 wt%,
- 0.0001 to 0.3 wt%, based on the weight of the final composition, of one or more amino acids, preferably 0.0005 to 0.2 wt%,
- 0.00007 to 0.5 wt%, based on the weight of the final composition, of one or more phenolic compounds, expressed as gallic acid equivalents, preferably 0.00015 to 0.07 wt%.
to reduce off-taste in the oil-in-water emulsified food composition, wherein the emulsion comprises vegetable oil and water, wherein the vegetable oil comprises C18:1 and C18:2 fatty acids, in an amount, based on the weight of the vegetable oil, of:
- C18:1 from 35 to 95 wt%, preferably from 40 to 90 wt%,
- C18:2 from 1 to 50 wt%, preferably of from 5 to 45 wt%.

It was surprisingly found, that by the specific combination of organic acid, amino acid and phenolic compounds, preferably when added via a source of organic acid, most preferably when added via a vinegar, the off taste of high oleic oil as observed upon storage of an emulsified food composition comprising high oleic oil, could be reduced, or even prevented.

The invention will now be exemplified by the following, non-limiting examples:

### Examples:

### Materials

| Water | Demineralized water |
|---|---|
| Rapeseed Oil | Rapeseed oil ex Cargill (Amsterdam, The Netherlands) |
| High Oleic Sunflower Oil | High oleic sunflower oil (C. Thywissen GmbH, Neuss, Germany) |
| Sugar | Sucrose white sugar W4 ex Suiker Unie (Oud Gastel, The Netherlands) |
| Salt | Sodium chloride Suprasel ex Akzo Nobel (Amesfoort, The Netherlands) |
| Spirit vinegar (12%) | Vinegar spirit 12% ex Kühne (Hamburg, Germany) |
| Egg yolk | Egg yolk ex Bouwhuis Enthoven (Raalte, The Netherlands); contains 92% egg yolk and 8% kitchen salt |
| Flavours | Natural flavour mix |
| Plum vinegar | Pödör Ole und Essige, Vertrieb über Arteriomed GmbH, Grevenbroich, Germany |
| Lactic Acid 80% | Lactic acid (80%) PURAC FCC 80 ex Corbion, Gorinchem, the Netherlands |
| EDTA | Calcium Disodium EDTA ex Brenntag Nederland B.V., Dordrecht, the Netherlands |

| Fatty acid composition of the oils used in the examples | | | |
|---|---|---|---|
| | | High oleic sunflower oil | Rapeseed oil |
| C18:1 | % | 80.1 | 62.3 |
| C18:2 | % | 10.7 | 19.3 |
| C18:3 | % | 0.2 | 8.1 |

### Methods - Organic acids and Amino acids

Quantitative analysis of organic acids and amino acids in various sources of organic acids was carried out spectroscopically (1H-NMR).

200 mg of sample (vinegar) was weighed and added with 3 ml of D2O. 600 µl of such sample mixture was added with 100 µl of CSI (Chemical Shift Indicator) solution (consisting of 10.90 mg of 3-(trimethylsilyl)propionic-2,2,3,3-d4 acid, sodium salt, 2.30 mg of difluorotrimethyl-silanyl-methyl)phosphonic acid and 30 ml of D2O), 100 µl of EDTA-d12 solution, and 300 µl of 0.2 M phosphate buffer. The sample mixture was homogenised and centrifuged at 15000 g for 10 minutes. 650 µl of the supernatant was transferred into 5-mm NMR tubes for analysis.

1D 1H NMR spectra were recorded with a noesygppr1d pulse sequence on a Bruker Avance III 600 NMR spectrometer, equipped with a 5-mm cryo-probe. The probe was tuned to detect 1H resonances at 600.25 MHz. The internal probe temperature was set to 298K. 128 scans were collected in 57K data points with a relaxation delay of 10 seconds, an acquisition time of 4 seconds and a mixing time of 100 ms. Low power water suppression (16 Hz) was applied for 0.99 seconds. The data were processed in Topspin software version 3.5 pl 1 (Bruker BioSpin GmbH, Rheinstetten, Germany). An exponential window function was applied to the free induction decay (FID) with a line-broadening factor of 0.15 Hz prior to the Fourier transformation. Manual phase correction and baseline correction was applied to all spectra. The spectra were referenced against the methyl signal of 3-(trimethylsilyl)propionic-2,2,3,3-d4 acid, sodium salt (δ 0.0 ppm).

### Methods - Phenolic compounds

The concentration of phenolic compounds is expressed as "gallic acid equivalents" (GAE), and determined using the Folin-Ciocalteu assay (see V.L. Singleton et al., Analysis of total phenols and other oxidation substrates and antioxidants by means of Folin-Ciocalteu reagent, Methods in Enzymology 299, 152-178, 1999).

### Methods - Absorbance at 280 nm and 420 nm

Samples of sources of organic acids were first diluted with demineralized water (1:1 v/v) and then transferred into a micro well plate for UV-VIS analysis (UV-star-96 VWR 736-0231). Absorbance spectra were recorded at 280 nm (typical for compounds with known antioxidant activity such as polyphenols and Maillard reaction intermediates) and 420 nm (typical for melanoidins and other coloured compounds).

### Samples

Mayonnaises were prepared according to the following recipes. The source of organic acids was a mixture of spirit vinegar and plum vinegar.

The mayonnaises were prepared at bench scale (0.25 kg emulsion), according to the following procedure. In the first step, the mayonnaise aqueous phase was prepared by mixing water, vinegars, egg, sucrose and salt in an Esco-Labor processing plant type EL10 (Riehen, Switzerland). Subsequently the oil was slowly added to the aqueous phase, under stirring conditions. After the oil had been homogenised into a coarse emulsion, the latter was pumped into a Labor-Pilot 2000/4 colloid mill (IKA Labor, Staufen, Germany), equipped with module MK. The speed of the colloid mill was set to 6000 rpm. The compositions had a pH of 3.8.

| | control | Mayonnaise 1 | Mayonnaise 2 | Mayonnaise 3 |
|---|---|---|---|---|
| | 100% Rapeseed Oil | 100% Rapeseed Oil | 100% High Oleic Oil (sunflower) | 100% High Oleic Oil (sunflower) + Plum vinegar |
| Water | 15.6 | 15.6 | 15.6 | 14.1 |
| Rapeseed Oil | 75 | 75 | 0 | 0 |
| High Oleic Sunflower Oil | 0 | 0 | 75 | 75 |
| Sucrose | 1.3 | 1.3 | 1.3 | 1.3 |
| Sodium chloride | 1.0 | 1.0 | 1.0 | 1.0 |
| Spirit vinegar (12%) | 2.6 | 2.6 | 2.6 | 1.6 |
| Egg yolk | 4.2 | 4.2 | 4.2 | 4.2 |
| Flavours | 0.3 | 0.3 | 0.3 | 0.3 |
| Plum vinegar | 0 | 0 | 0 | 2.5 |
| EDTA | 0.0075 | 0 | 0 | 0 |

The pH was balanced to 3.8 with lactic acid.

### Analytical parameters of vinegars used in mayonnaises

| *Sample* | *Ratio organic acids other than acetic acid to total organic acids [%]* | *Ratio amino acids to total organic acids [%]* | *Absorbance at 420 nm [-]* |
|---|---|---|---|
| Mix spirit/plum vinegar | 1,85 | 0,11 | 0,03-0,29 |
| Plum vinegar | 4,72 | 0,28 | 0,29 |
| Spirit vinegar | 0,01 | 0,00 | 0,03 |

### Concentrations of compounds in mayonnaises

| *Sample* | *Organic acids other than acetic acid [wt%]* | *Aminoacids [wt%]* | *Phenolic compounds [GAE %]* |
|---|---|---|---|
| Mayonnaise 3 | 0,0055 | 0,0003 | 0,0014 |
| Mayonnaise control/1/2 | 0,0000 | 0,0000 | 0,00003 |

### Example 1

| | Headspace oxygen content [%] | | | |
|---|---|---|---|---|
| | control | Mayonnaise 1 Comparative | Mayonnaise 2 Comparative | Mayonnaise 3 Invention |
| Storage time at 50°C [days] | 100% Rapeseed Oil + EDTA | 100% Rapeseed Oil | 100% High Oleic Oil (sunflower) | 100% High Oleic oil + Plum vinegar |
| 0 | 21,2 | 21,1 | 21,4 | 21,3 |
| 2 | 20,9 | 19,1 | 20,5 | 20.9 |
| 5 | 20,3 | 16,9 | 19,3 | 20.1 |
| 7 | 20,5 | 16,4 | 19,2 | 20.0 |
| 9 | 20,3 | 15,9 | 19,0 | 20.0 |
| 12 | 18,9 | 14,4 | 17,9 | 18.8 |
| 14 | 18,7 | 13,9 | 17,6 | 18.3 |
| 16 | 18,7 | 13,5 | 17,6 | 18.5 |
| 20 | 17,2 | 11,7 | 16,5 | 17.4 |
| 22 | 16,9 | 11,0 | 16,4 | 17.2 |
| 27 | 16,0 | 8,0 | 15,8 | 16.6 |
| 29 | 16,0 | 6,7 | 15,9 | 16.7 |
| 33 | 15,0 | 1,3 | 14,8 | 16.2 |

The example shows the relative oxidative stability of 3 mayonnaise samples produced with rape seed oil, high oleic oil and high oleic oil with plum vinegar, and a control mayonnaise comprising EDTA. EDTA is the standard chelating chemical commonly used in commercial mayonnaise products to prevent oil oxidation, and used in this test as positive control. The shelf life of the mayonnaise samples was evaluated under accelerated conditions (50°C) for a period of 33 days.

The measurement of the headspace oxygen content is a well-established method to assess lipid oxidation in closed systems. In general, 1 g of sample is filled in a capped glass vial (20 mL). Oxygen content is determined by taking a sample of gas from the head space with a needle through the septum of the closed lid of the jar followed by measurement with a gas analyser. A lower oxygen content indicates a higher degree of oxidation.

After 33 days of storage, Mayonnaise 1 (where the oil phase is 100% rapeseed oil) is fully oxidized (the residual oxygen content in the headspace is below 2%). Mayonnaise 2 and 3 show a similar level of oxidation (still 14.8 and 16.2 % of oxygen left in the headspace, similar to the positive control with EDTA), reflecting the relatively small sensitivity of high oleic oil for oxidation, compared to rapeseed oil.

### Example 2

| | | Sensorial evaluation | | |
|---|---|---|---|---|
| | Control (EDTA) | Mayonnaise 1 Comparative | Mayonnaise 2 Comparative | Mayonnaise 3 Invention |
| Storage time at ambient | A | 100% Rapeseed Oil | 100% High Oleic Oil (sunflower) | 100% High Oleic oil + Plum vinegar |
| 0 weeks | A | A | A | A |
| 2 weeks | A | NA | A | A |
| 4 weeks | A | NA | B | A |
| 6 weeks | A | NA | B | A |
| 8 weeks | A | NA | B | A |
| 12 weeks | A | NA | NA | A |
| 16 weeks | A | NA | NA | B |

| | | | | |
|---|---|---|---|---|
| A = Acceptable; B = Borderline; NA = Not Acceptable | | | | |

The mayonnaise samples were evaluated sensorially by storing samples under non-accelerated conditions (ambient temperature) for a period of 16 weeks.

The overall quality of the mayonnaise samples was scored by an expert panel of 6 people as acceptable, borderline or not acceptable.

Already after 2 weeks of storage, Mayonnaise 1 (containing 100% rapeseed oil) was evaluated not acceptable by the expert panel. Mayonnaise 2 and 3, and the control with EDTA show similar high remaining levels of oxygen in the head space, *i.e.* relatively little oxidation, (compared to non-high oleic oil, 1.3%). Despite a similar level of oxygen in Mayonnaises 2 and 3, the taste of Mayonnaise 3 comprising plum vinegar remains acceptable up to 16 weeks when the flavour becomes borderline (B). Without plum vinegar, the flavour becomes borderline already after 4 weeks, and after 8 weeks the taste is not acceptable anymore (mayonnaise 2).

### Conclusion

By the Examples it is shown, that by the use of the specific combination of organic aid, amino acids, phenolic compounds in the claimed amounts and ratios, preferably added as a vinegar that provides these levels and rations in the emulsion, an acceptable mayonnaise composition could be made with high oleic oil, which shows significant oxidation reduction while showing an acceptable flavour profile (arising of off taste is significantly delayed) in shelf life time.

## Claims

1. An oil-in-water emulsified food composition comprising:
• Water,
• Vegetable oil, comprising C18:1 and C18:2 fatty acids, in an amount, based on the weight of the vegetable oil, of:
∘ C18:1 from 35 to 95 wt%, preferably from 40 to 90 wt%,
∘ C18:2 from 1 to 50 wt%, preferably of from 5 to 45 wt%,
wherein the vegetable oil comprises a high oleic oil, which is defined as an oil wherein the fatty acid composition comprises more than 70 wt% of oleic acid, based on the weight of the high oleic oil,
wherein the composition does not comprise olive oil,
• acetic acid,
• 0.0007 to 0.7 wt%, based on the weight of the composition, of one or more organic acids other than acetic acid,
• 0.0001 to 0.3 wt%, based on the weight of the composition, of one or more amino acids,
• 0.00007 to 0.5 wt%, based on the weight of the composition, of one or more phenolic compounds, expressed as gallic acid equivalents, as determined by the Folin-Ciocalteu assay, wherein the ratio of the weight of total organic acids other than acetic acid to the weight of the total of organic acids is from 0.5 to 60 %, and
wherein the weight ratio of the total of amino acids to the total organic acids is from 0.05 to 20 %.

2. An oil-in-water emulsified food composition according to claim 1, comprising:
• Water,
• Vegetable oil, comprising C18:1 and C18:2 fatty acids, in an amount, based on the weight of the vegetable oil, of:
∘ C18:1 from 35 to 95 wt%, preferably from 40 to 90 wt%,
∘ C18:2 from 1 to 50 wt%, preferably of from 5 to 45 wt%,
wherein the vegetable oil comprises a high oleic oil, which is defined as an oil wherein the fatty acid composition comprises more than 70 wt% of oleic acid, based on the weight of the high oleic oil,
wherein the composition does not comprise olive oil,
• A source of organic acids comprising
∘ acetic acid and
∘ 0.0007 to 0.7 wt%, based on the weight of the composition, of one or more organic acids other than acetic acid,
• 0.0001 to 0.3 wt%, based on the weight of the composition, of one or more amino acids,
• 0.00007 to 0.5 wt%, based on the weight of the composition, of one or more phenolic compounds, expressed as gallic acid equivalents, wherein the ratio of the weight of total organic acids other than acetic acid to the weight of the total of organic acids in the composition, preferably in the source of organic acids, is from 0.5 to 60 %, and
wherein the weight ratio of the total of amino acids to the total organic acids in the composition is from 0.05 to 20 %.

3. Composition according to any one of the preceding claims, wherein said amino acids and said phenolic compounds are comprised by the source of the organic acids and wherein the weight ratio of the total amino acids to the total organic acids in the composition, preferably in the source of organic acids, is from 0.05 to 20%.

4. Composition according to any one of the preceding claims, wherein the vegetable oil comprises less than 50% wt of C18:2 and C18:3 fatty acids taken together, based on the weight of the vegetable oil.

5. Composition according to any one of the preceding claims, wherein the vegetable oil comprises C18:3 in an amount of from 0.01 wt% to 9 wt%, based on the weight of the vegetable oil.

6. Composition according to any one of the preceding claims, wherein the vegetable oil comprises C18:1 in an amount of from 40 wt% to 90 wt%, and C18:2 is from 5 wt% to 45 wt%, based on the weight of the vegetable oil.

7. Composition according to any one of the preceding claims, wherein the vegetable oil comprises high oleic oil and further comprises oil which is not a high oleic oil, wherein high oleic oil is defined as an oil wherein the fatty acid composition comprises more than 70 wt% of oleic acid, based on the weight of the high oleic oil.

8. Composition according to any one of the preceding claims, wherein the high oleic oil is present in an amount of from 20 wt% to 100 wt%, preferably of from 20 to 80 wt% based on the weight of the total vegetable oil in the composition.

9. Composition according to any one of the preceding claims, wherein the high oleic oil is present in an amount of more than 25 wt% based on the weight of the composition.

10. Composition according to any one of the preceding claims, wherein saturated fatty acids are present in an amount of from 2 to 15 wt%, based on the weight of the total vegetable oil.

11. Composition according to any one of claims 2 to 10, wherein the source of organic acids is one or more vinegars.

12. Process for manufacturing an oil-in-water emulsified food composition according to any one of the preceding claims, the process comprising the steps of:
a. Providing a water phase comprising:
• water and,
• a source of organic acids comprising:
i. acetic acid and
ii. one or more organic acids other than acetic acid, wherein the ratio of the weight of total organic acids other than acetic acid to the weight of the total of organic acids in the source of organic acids is from 0.5 to 60 %,
• one or more amino acids, wherein the weight ratio of the total of amino acids to the total organic acids in the water phase is from 0.05 to 20 %,
• one or more phenolic compounds, wherein the weight ratio of the phenolic compounds, expressed as gallic acid equivalents, to total organic acids in the water phase is from 0.1 to 50 %,
b. Providing an oil phase comprising vegetable oil comprising C18:1 and C18:2 fatty acids, in an amount, based on the weight of the vegetable oil, of:
• C18:1 from 35 to 95 wt%, preferably from 40 to 90 wt%,
• C18:2 from 1 to 50 wt%, preferably of from 5 to 45 wt%, wherein the vegetable oil comprises a high oleic oil, which is defined as an oil wherein the fatty acid composition comprises more than 70 wt% of oleic acid, based on the weight of the high oleic oil, wherein the composition does not comprise olive oil,
c. Mixing the oil and the water phase to provide an emulsified food composition comprising:
• 0.0007 to 0.7 wt%, based on the weight of the final composition, of one or more organic acids other than acetic acids,
• 0.0001 to 0.3 wt%, based on the weight of the final composition, of one or more amino acids,
• 0.00007 to 0.5 wt% , based on the weight of the final composition, of one or more phenolic compounds, expressed as gallic acid equivalents as determined by the Folin-Ciocalteu assay.

13. Process according to claim 13, the process comprising the steps of:
a. Providing a water phase comprising:
• water
• a source of organic acid, wherein the source of organic aid comprises:
i. acetic acid,
ii. one or more organic acids other than acetic acid, wherein the ratio of the weight of total organic acids other than acetic acid to the weight of the total of organic acids in the source of organic acid is from 0.5 to 60 %,
iii. amino acids, wherein the weight ratio of the total of amino acids to the total organic acids in the source of organic acid is from 0.05 to 20 %,
iv. phenolic compounds, wherein the weight ratio of the phenolic compounds, expressed as gallic acid equivalents, to total organic acids in the source of organic acids is from 0.1 to 50 %,
b. Providing an oil phase comprising vegetable oil comprising C18:1 and C18:2 fatty acids, in an amount, based on the weight of the vegetable oil, of:
• C18:1 from 35 to 95 wt%, preferably from 40 to 90 wt%,
• C18:2 from 1 to 50 wt%, preferably of from 5 to 45 wt%, wherein the vegetable oil comprises a high oleic oil, which is defined as an oil wherein the fatty acid composition comprises more than 70 wt% of oleic acid, based on the weight of the high oleic oil,
wherein the composition does not comprise olive oil,
c. Mixing the oil phase and the water phase to provide an emulsified food composition, to result in a final composition comprising
• 0.0007 to 0.7 wt%, based on the weight of the final composition, of one or more organic acids other than acetic acids,
• 0.0001 to 0.3 wt%, based on the weight of the final composition, of one or more amino acids,
• 0.00007 to 0.5 wt%, based on the weight of the final composition, of one or more phenolic compounds, expressed as gallic acid equivalents.

14. Process according to claim 12 or 13, wherein the source of organic acids is one or more vinegars.

15. Use of a source of organic acids in an oil in water emulsified food composition, the source of organic acid comprising:
• acetic acid,
• one or more organic acids other than acetic acid, wherein the ratio of the weight of total organic acids other than acetic acid to the weight of the total of organic acids in the source of organic acids is from 0.5 to 60 %,
• one or more amino acids, wherein the weight ratio of the total of amino acids to the total organic acids in the source of organic acids is from 0.05 to 20 %,
• one or more phenolic compounds, wherein the weight ratio of the phenolic compounds, expressed as gallic acid equivalents, to total organic acids in the source of organic acid is from 0.1 to 50 %,
in such an amount that the oil-in-water emulsified food composition comprises:
• 0.0007 to 0.7 wt%, based on the weight of the final food composition, of one or more organic acids other than acetic acids,
• 0.0001 to 0.3 wt%, based on the weight of the final composition, of one or more amino acids,
• 0.00007 to 0.5 wt% , based on the weight of the final composition, of one or more phenolic compounds, expressed as gallic acid equivalents, as determined by the Folin-Ciocalteu assay,
to reduce off-taste in the oil-in-water emulsified food composition, wherein the emulsion comprises vegetable oil and water, wherein the vegetable oil comprises C18:1 and C18:2 fatty acids, in an amount, based on the weight of the vegetable oil, of:
• C18:1 from 35 to 95 wt%, preferably from 40 to 90 wt%,
• C18:2 from 1 to 50 wt%, preferably of from 5 to 45 wt%.
wherein the vegetable oil comprises a high oleic oil, which is defined as an oil wherein the fatty acid composition comprises more than 70 wt% of oleic acid, based on the weight of the high oleic oil wherein the composition does not comprise olive oil.

## Patentansprüche

1. Öl-in-Wasser-emulgierte Lebensmittelzusammensetzung, umfassend:
• Wasser,
• Pflanzenöl, umfassend C18:1- und C18:2-Fettsäuren in einer Menge, bezogen auf das Gewicht des Pflanzenöls, von:
∘ C18:1 von 35 bis 95 Gew.-%, vorzugsweise von 40 bis 90 Gew.-%,
∘ C18:2 von 1 bis 50 Gew.-%, vorzugsweise von 5 bis 45 Gew.-%, wobei das Pflanzenöl ein Öl mit hohem Ölsäuregehalt umfasst, welches als ein Öl definiert ist, wobei die Fettsäurezusammensetzung mehr als 70 Gew.-% Ölsäure, bezogen auf das Gewicht des Öls mit hohem Ölsäuregehalt, umfasst,
wobei die Zusammensetzung kein Ölivenöl umfasst,
• Essigsäure,
• 0,0007 bis 0,7 Gew.-%, bezogen auf das Gewicht der Zusammensetzung, einer oder mehrerer organischer Säuren, außer Essigsäure,
• 0,0001 bis 0,3 Gew.-%, bezogen auf das Gewicht der Zusammensetzung, einer oder mehrerer Aminosäuren,
• 0,00007 bis 0,5 Gew.-%, bezogen auf das Gewicht der Zusammensetzung, einer oder mehrerer phenolischer Verbindungen, ausgedrückt als Gallussäureäquivalente, bestimmt durch den Folin-Ciocalteu-Test,
wobei das Verhältnis des Gewichts der gesamten organischen Säuren, außer Essigsäure, zu dem Gewicht der gesamten organischen Säuren von 0,5 bis 60% beträgt und wobei das Gewichtsverhältnis der gesamten Aminosäuren zu den gesamten organischen Säuren von 0,05 bis 20% beträgt.

2. Öl-in-Wasser-emulgierte Lebensmittelzusammensetzung nach Anspruch 1, umfassend:
• Wasser,
• Pflanzenöl, umfassend C18:1- und C18:2-Fettsäuren in einer Menge, bezogen auf das Gewicht des Pflanzenöls, von:
∘ C18:1 von 35 bis 95 Gew.-%, vorzugsweise von 40 bis 90 Gew.-%,
∘ C18:2 von 1 bis 50 Gew.-%, vorzugsweise von 5 bis 45 Gew.-%, wobei das Pflanzenöl ein Öl mit hohem Ölsäuregehalt umfasst, welches als ein Öl definiert ist, wobei die Fettsäurezusammensetzung mehr als 70 Gew.-% Ölsäure, bezogen auf das Gewicht des Öls mit hohem Ölsäuregehalt, umfasst,
wobei die Zusammensetzung kein Ölivenöl umfasst,
• eine Quelle von organischen Säuren, umfassend
o Essigsäure und
o 0,0007 bis 0,7 Gew.-%, bezogen auf das Gewicht der Zusammensetzung, einer oder mehrerer organischer Säuren, außer Essigsäure,
• 0,0001 bis 0,3 Gew.-%, bezogen auf das Gewicht der Zusammensetzung, einer oder mehrerer Aminosäuren,
• 0,00007 bis 0,5 Gew.-%, bezogen auf das Gewicht der Zusammensetzung, einer oder mehrerer phenolischer Verbindungen, ausgedrückt als Gallussäureäquivalente,
wobei das Verhältnis des Gewichts der gesamten organischen Säuren, außer Essigsäure, zu dem Gewicht der gesamten organischen Säuren in der Zusammensetzung, vorzugsweise in der Quelle der organischen Säuren, von 0,5 bis 60% beträgt und
wobei das Gewichtsverhältnis der gesamten Aminosäuren zu den gesamten organischen Säuren in der Zusammensetzung von 0,05 bis 20% beträgt.

3. Zusammensetzung nach irgendeinem der vorhergehenden Ansprüche, wobei die Aminosäuren und die phenolischen Verbindungen durch die Quelle der organischen Säuren umfasst werden und wobei das Gewichtsverhältnis der gesamten Aminosäuren zu den gesamten organischen Säuren in der Zusammensetzung, vorzugsweise in der Quelle der organischen Säuren, von 0,05 bis 20% beträgt.

4. Zusammensetzung nach irgendeinem der vorhergehenden Ansprüche, wobei das Pflanzenöl weniger als 50 Gew.-% C18:2- und C18:3-Fettsäuren, zusammengenommen, bezogen auf das Gewicht des Pflanzenöls, umfasst.

5. Zusammensetzung nach irgendeinem der vorhergehenden Ansprüche, wobei das Pflanzenöl C18:3 in einer Menge von 0,01 Gew.-% bis 9 Gew.-%, bezogen auf das Gewicht des Pflanzenöls, umfasst.

6. Zusammensetzung nach irgendeinem der vorhergehenden Ansprüche, wobei das Pflanzenöl C18:1 in einer Menge von 40 Gew.-% bis 90 Gew.-% und C18:2 von 5 Gew.-% bis 45 Gew.-%, bezogen auf das Gewicht des Pflanzenöls, umfasst.

7. Zusammensetzung nach irgendeinem der vorhergehenden Ansprüche, wobei das Pflanzenöl Öl mit hohem Ölsäuregehalt umfasst und ferner Öl umfasst, das kein Öl mit hohem Ölsäuregehalt ist, wobei das Öl mit hohem Ölsäuregehalt als ein Öl definiert ist, wobei die Fettsäurezusammensetzung mehr als 70 Gew.-% Ölsäure, bezogen auf das Gewicht des Öls mit hohem Ölsäuregehalt, umfasst.

8. Zusammensetzung nach irgendeinem der vorhergehenden Ansprüche, wobei das Öl mit hohem Ölsäuregehalt in einer Menge von 20 Gew.-% bis 100 Gew.-%, vorzugsweise von 20 bis 80 Gew.-%, bezogen auf das Gewicht des gesamten Pflanzenöls in der Zusammensetzung, vorliegt.

9. Zusammensetzung nach irgendeinem der vorhergehenden Ansprüche, wobei das Öl mit hohem Ölsäuregehalt in einer Menge von mehr als 25 Gew.-%, bezogen auf das Gewicht der Zusammensetzung, vorliegt.

10. Zusammensetzung nach irgendeinem der vorhergehenden Ansprüche, wobei gesättigte Fettsäuren in einer Menge von 2 bis 15 Gew.-%, bezogen auf das Gewicht des gesamten Pflanzenöls, vorliegen.

11. Zusammensetzung nach irgendeinem der Ansprüche 2 bis 10, wobei die Quelle der organischen Säuren ein oder mehrere Essige sind.

12. Verfahren zur Herstellung einer Öl-in-Wasser-emulgierten Lebensmittelzusammensetzung nach irgendeinem der vorhergehenden Ansprüche, wobei das Verfahren umfasst:
a. Bereitstellen einer Wasserphase, umfassend:
• Wasser und
• eine Quelle organischer Säuren, umfassend:
i. Essigsäure und
ii. ein oder mehrere organische Säuren, außer Essigsäure, wobei das Verhältnis des Gewichts der gesamten organischen Säuren, außer Essigsäure, zu dem Gewicht der gesamten organischen Säuren in der Quelle der organischen Säuren von 0,5 bis 60% beträgt,
• eine oder mehrere Aminosäuren, wobei das Gewichtsverhältnis der gesamten Aminosäuren zu den gesamten organischen Säuren in der Wasserphase von 0,05 bis 20% beträgt,
• eine oder mehrere phenolische Verbindungen, wobei das Gewichtsverhältnis der phenolischen Verbindungen, ausgedrückt als Gallusäquivalente, zu den gesamten organischen Säuren in der Wasserphase von 0,1 bis 50% beträgt,
b. Bereitstellen einer Ölphase, umfassend Pflanzenöl, umfassend C18:1- und C18:2-Fettsäuren in einer Menge, bezogen auf das Gewicht des Pflanzenöls von:
• C18:1 von 35 bis 95 Gew.-%, vorzugsweise von 40 bis 90 Gew.-%,
• C18:2 von 1 bis 50 Gew.-%, vorzugsweise von 5 bis 45 Gew.-%,
wobei das Pflanzenöl ein Öl mit hohem Ölsäuregehalt umfasst, welches als ein Öl definiert ist, wobei die Fettsäurezusammensetzung mehr als 70 Gew.-% Ölsäure, bezogen auf das Gewicht des Öls mit hohem Ölsäuregehalt, umfasst,
wobei die Zusammensetzung kein Ölivenöl umfasst,
c. Mischen der Öl- und der Wasserphase, um eine emulgierte Lebensmittelzusammensetzung bereitzustellen, umfassend:
• 0,0007 bis 0,7 Gew.-%, bezogen auf das Gewicht der fertigen Zusammensetzung, einer oder mehrerer organischer Säuren, außer Essigsäuren,
• 0,0001 bis 0,3 Gew.-%, bezogen auf das Gewicht der fertigen Zusammensetzung, einer oder mehrerer Aminosäuren,
• 0,00007 bis 0,5 Gew.-%, bezogen auf das Gewicht der fertigen Zusammensetzung, einer oder mehrerer phenolischer Verbindungen, ausgedrückt als Gallussäureäquivalente, bestimmt nach dem Folin-Ciocalteu-Test.

13. Verfahren nach Anspruch 12, wobei das Verfahren die Schritte umfasst:
a. Bereitstellen einer Wasserphase, umfassend:
• Wasser
• eine Quelle organischer Säure, wobei die Quelle organischer Säure umfasst:
i. Essigsäure,
ii. eine oder mehrere organische Säuren, außer Essigsäure, wobei das Verhältnis des Gewichts der gesamten organischen Säuren, außer Essigsäure, zu dem Gewicht der gesamten organischen Säuren in der Quelle der organischen Säure von 0,5 bis 60% beträgt,
iii. Aminosäuren, wobei das Gewichtsverhältnis der gesamten Aminosäuren zu den gesamten organischen Säuren in der Quelle der organischen Säure von 0,05 bis 20% beträgt,
iv. phenolische Verbindungen, wobei das Gewichtsverhältnis der phenolischen Verbindungen, ausgedrückt als Gallussäureäquivalente, zu den gesamten organischen Säuren in der Quelle der organischen Säuren von 0,1 bis 50% beträgt,
b. Bereitstellen einer Ölphase, umfassend Pflanzenöl, umfassend C18:1- und C18:2-Fettsäuren in einer Menge, bezogen auf das Gewicht des Pflanzenöls, von:
• C18:1 von 35 bis 95 Gew.-%, vorzugsweise von 40 bis 90 Gew.-%,
• C18:2 von 1 bis 50 Gew.-%, vorzugsweise von 5 bis 45 Gew.-%,
wobei das Pflanzenöl ein Öl mit hohem Ölsäuregehalt umfasst, welches als ein Öl definiert ist, wobei die Fettsäurezusammensetzung mehr als 70 Gew.-% Ölsäure, bezogen auf das Gewicht des Öls mit hohem Ölsäuregehalt, umfasst,
wobei die Zusammensetzung kein Ölivenöl umfasst,
c. Mischen der Ölphase und der Wasserphase, um eine emulgierte Lebensmittelzusammensetzung bereitzustellen, um zu einer fertigen Zusammensetzung zu führen, umfassend
• 0,0007 bis 0,7 Gew.-%, bezogen auf das Gewicht der fertigen Zusammensetzung, einer oder mehrerer organischer Säuren, außer Essigsäuren,
• 0,0001 bis 0,3 Gew.-%, bezogen auf das Gewicht der fertigen Zusammensetzung, einer oder mehrerer Aminosäuren,
• µ 0,00007 bis 0,5 Gew.-%, bezogen auf das Gewicht der fertigen Zusammensetzung, einer oder mehrerer phenolischer Verbindungen, ausgedrückt als Gallussäureäquivalente.

14. Verfahren nach Anspruch 12 oder 13, wobei die Quelle der organischen Säuren einen oder mehrere Essige darstellt.

15. Verwendung einer Quelle von organischen Säuren in einer Öl-in-Wasser-emulgierten Lebensmittelzusammensetzung, wobei die Quelle organischer Säure umfasst:
• Essigsäure,
• eine oder mehrere organische Säuren, außer Essigsäure, wobei das Verhältnis des Gewichts der gesamten organischen Säuren, außer Essigsäure, zu dem Gewicht der gesamten organischen Säuren in der Quelle der organischen Säuren 0,5 bis 60% beträgt,
• eine oder mehrere Aminosäuren, wobei das Gewichtsverhältnis der gesamten Aminosäuren zu den gesamten organischen Säuren in der Quelle der organischen Säuren von 0,05 bis 20% beträgt,
• eine oder mehrere phenolische Verbindungen, wobei das Gewichtsverhältnis der phenolischen Verbindungen, ausgedrückt als Gallussäureäquivalente, zu den gesamten organischen Säuren in der Quelle organischer Säure von 0,1 bis 50% beträgt,
in einer solchen Menge, dass die Öl-in-Wasser-emulgierte Lebensmittelzusammensetzung umfasst:
• 0,0007 bis 0,7 Gew.-%, bezogen auf das Gewicht der fertigen Lebensmittelzusammensetzung, einer oder mehrerer organischer Säuren, außer Essigsäuren,
• 0,0001 bis 0,3 Gew.-%, bezogen auf das Gewicht der fertigen Zusammensetzung, einer oder mehrerer Aminosäuren,
• 0,00007 bis 0,5 Gew.-%, bezogen auf das Gewicht der fertigen Zusammensetzung, einer oder mehrerer phenolischer Verbindungen, ausgedrückt als Gallussäureäquivalente, bestimmt durch den Folin-Ciocalteu-Test,
um den Beigeschmack in der Öl-in-Wasser-emulgierten Lebensmittelzusammensetzung zu vermindern, wobei die Emulsion Pflanzenöl und Wasser umfasst, wobei das Pflanzenöl C18:1- und C18:2-Fettsäuren, in einer Menge umfasst, bezogen auf das Gewicht des Pflanzenöls, von:
• C18:1 von 35 bis 95 Gew.-%, vorzugsweise von 40 bis 90 Gew.-%,
• C18:2 von 1 bis 50 Gew.-%, vorzugsweise von 5 bis 45 Gew.-%, wobei das Pflanzenöl ein Öl mit hohem Ölsäuregehalt umfasst, welches als ein Öl definiert ist, wobei die Fettsäurezusammensetzung mehr als 70 Gew.-% Ölsäure, bezogen auf das Gewicht des Öls mit hohem Ölsäuregehalt, umfasst,
wobei die Zusammensetzung kein Olivenöl umfasst.

## Revendications

1. Composition alimentaire émulsifiée huile-dans-eau comprenant :
• de l'eau,
• de l'huile végétale, comprenant des acides gras en C18:1 et C18:2, dans une quantité, sur la base de la masse de l'huile végétale, de :
o C18:1 de 35 à 95 % en masse, de préférence de 40 à 90 % en masse,
o C18:2 de 1 à 50 % en masse, de préférence de 5 à 45 % en masse,
dans laquelle l'huile végétale comprend une huile oléique élevée, qui est définie comme une huile dans laquelle la composition d'acide gras comprend plus de 70 % en masse d'acide oléique, sur la base de la masse de l'huile oléique élevée,
dans laquelle la composition ne comprend pas d'huile d'olive,
• de l'acide acétique,
• 0,0007 à 0,7 % en masse, sur la base de la masse de la composition, d'un ou plusieurs acides organiques différents de l'acide acétique,
• 0,0001 à 0,3 % en masse, sur la base de la masse de la composition, d'un ou plusieurs acides aminés,
• 0,00007 à 0,5 % en masse, sur la base de la masse de la composition, d'un ou plusieurs composés phénoliques, exprimés comme équivalents d'acide gallique, comme déterminé par le dosage de Folin-Ciocalteu,
dans laquelle le rapport de la masse du total des acides organiques différents de l'acide acétique à la masse du total des acides organiques est de 0,5 à 60 %, et
dans laquelle le rapport en masse du total des acides aminés au total des acides organiques est de 0,05 à 20 %.

2. Composition alimentaire émulsifiée huile-dans-eau selon la revendication 1, comprenant :
• de l'eau
• de l'huile végétale, comprenant des acides gras en C18:1 et C18:2, dans une quantité, sur la base de la masse de l'huile végétale, de :
∘ C18:1 de 35 à 95 % en masse, de préférence de 40 à 90 % en masse,
∘ C18:2 de 1 à 50 % en masse, de préférence de 5 à 45 % en masse,
dans laquelle l'huile végétale comprend une huile oléique élevée, qui est définie comme une huile dans laquelle la composition d'acide gras comprend plus de 70 % en masse d'acide oléique, sur la base de la masse de l'huile oléique élevée,
dans laquelle la composition ne comprend pas d'huile d'olive,
• une source d'acides organiques comprenant
o de l'acide acétique et
o 0,0007 à 0,7 % en masse, sur la base de la masse de la composition, d'un ou plusieurs acides organiques différents de l'acide acétique,
• 0,0001 à 0,3 % en masse, sur la base de la masse de la composition, d'un ou plusieurs acides aminés,
• 0,00007 à 0,5 % en masse, sur la base de la masse de la composition, d'un ou plusieurs composés phénoliques, exprimés comme équivalents d'acide gallique,
dans laquelle le rapport de la masse du total des acides organiques différents de l'acide acétique à la masse du total des acides organiques dans la composition, de préférence dans la source d'acides organiques, est de 0,5 à 60 %, et
dans laquelle le rapport en masse du total des acides aminés au total des acides organiques dans la composition est de 0,05 à 20 %.

3. Composition selon l'une quelconque des revendications précédentes, dans laquelle lesdits acides aminés et lesdits composés phénoliques sont compris par la source des acides organiques et dans laquelle le rapport en masse du total des acides aminés au total des acides organiques dans la composition, de préférence dans la source d'acides organiques, est de 0,05 à 20 %.

4. Composition selon l'une quelconque des revendications précédentes, dans laquelle l'huile végétale comprend moins de 50 % en masse d'acides gras en C18:2 et C18:3 pris ensemble, sur la base de la masse de l'huile végétale.

5. Composition selon l'une quelconque des revendications précédentes, dans laquelle l'huile végétale comprend C18:3 dans une quantité de 0,01 % en masse à 9 % en masse, sur la base de la masse de l'huile végétale.

6. Composition selon l'une quelconque des revendications précédentes, dans laquelle l'huile végétale comprend C18:1 dans une quantité de 40 % en masse à 90 % en masse, et C18:2 est de 5 % en masse à 45 % en masse, sur la base de la masse de l'huile végétale.

7. Composition selon l'une quelconque des revendications précédentes, dans laquelle l'huile végétale comprend de l'huile oléique élevée et comprend de plus de l'huile qui n'est pas une huile oléique élevée, dans laquelle l'huile oléique élevée est définie comme une huile dans laquelle la composition d'acide gras comprend plus de 70 % en masse d'acide oléique, sur la base de la masse de l'huile oléique élevée.

8. Composition selon l'une quelconque des revendications précédentes, dans laquelle l'huile oléique élevée est présente dans une quantité de 20 % en masse à 100 % en masse, de préférence de 20 à 80 % en masse sur la base de la masse de l'huile végétale totale dans la composition.

9. Composition selon l'une quelconque des revendications précédentes, dans laquelle l'huile oléique élevée est présente dans une quantité supérieure à 25 % en masse sur la base de la masse de la composition.

10. Composition selon l'une quelconque des revendications précédentes, dans laquelle des acides gras saturés sont présents dans une quantité de 2 à 15 % en masse, sur la base de la masse de l'huile végétale totale.

11. Composition selon l'une quelconque des revendications 2 à 10, dans laquelle la source d'acides organiques est un ou plusieurs vinaigres.

12. Procédé pour la fabrication d'une composition alimentaire émulsifiée huile-dans-eau selon l'une quelconque des revendications précédentes, le procédé comprenant les étapes de :
a. fourniture d'une phase aqueuse comprenant :
• de l'eau et,
• une source d'acides organiques comprenant :
i. de l'acide acétique et
ii. un ou plusieurs acides organiques différents de l'acide acétique, dans lequel le rapport de la masse du total des acides organiques différents de l'acide acétique à la masse du total des acides organiques dans la source d'acides organiques est de 0,5 à 60 %,
• un ou plusieurs acides aminés, dans lequel le rapport en masse du total des acides aminés au total des acides organiques dans la phase aqueuse est de 0,05 à 20 %,
• un ou plusieurs composés phénoliques, dans lequel le rapport en masse des composés phénoliques, exprimés comme équivalents d'acide gallique au total des acides organiques dans la phase aqueuse est de 0,1 à 50 %,
b. fourniture d'une phase d'huile comprenant de l'huile végétale comprenant des acides gras en C18:1 et C18:2, dans une quantité, sur la base de la masse de l'huile végétale, de :
• C18:1 de 35 à 95 % en masse, de préférence de 40 à 90 % en masse,
• C18:2 de 1 à 50 % en masse, de préférence de 5 à 45 % en masse,
dans lequel l'huile végétale comprend une huile oléique élevée, qui est définie comme une huile dans laquelle la composition d'acide gras comprend plus de 70 % en masse d'acide oléique, sur la base de la masse de l'huile oléique élevée,
dans lequel la composition ne comprend pas d'huile d'olive,
c. mélange de l'huile et de la phase aqueuse pour fournir une composition alimentaire émulsifiée comprenant :
• 0,0007 à 0,7 % en masse, sur la base de la masse de la composition finale, d'un ou plusieurs acides organiques différents de l'acide acétique,
• 0,0001 à 0,3 % en masse, sur la base de la masse de la composition finale, d'un ou plusieurs acides aminés,
• 0,00007 à 0,5 % en masse, sur la base de la masse de la composition finale, d'un ou plusieurs composés phénoliques, exprimés comme équivalents d'acide gallique comme déterminé par le dosage de Folin-Ciocalteu.

13. Procédé selon la revendication 12, le procédé comprenant les étapes de :
a. fourniture d'une phase aqueuse comprenant :
• de l'eau
• une source d'acide organique, dans laquelle la source d'acide organique comprend :
i. de l'acide acétique,
ii. un ou plusieurs acides organiques différents de l'acide acétique, dans lequel le rapport de la masse du total des acides organiques différents de l'acide acétique à la masse du total des acides organiques dans la source d'acide organique est de 0,5 à 60 %,
iii. des acides aminés, dans lequel le rapport en masse du total des acides aminés au total des acides organiques dans la source d'acide organique est de 0,05 à 20 %,
iv. des composés phénoliques, dans lequel le rapport en masse des composés phénoliques, exprimés comme équivalents d'acide gallique, au total des acides organiques dans la source d'acides organiques est de 0,1 à 50 %,
b. fourniture d'une phase d'huile comprenant de l'huile végétale comprenant des acides gras en C18:1 et C18:2, dans une quantité, sur la base de la masse de l'huile végétale, de :
• C18:1 de 35 à 95 % en masse, de préférence de 40 à 90 % en masse,
• C18:2 de 1 à 50 % en masse, de préférence de 5 à 45 % en masse,
dans lequel l'huile végétale comprend une huile oléique élevée, qui est définie comme une huile dans laquelle la composition d'acide gras comprend plus de 70 % en masse d'acide oléique, sur la base de la masse de l'huile oléique élevée,
dans lequel la composition ne comprend pas d'huile d'olive,
c. mélange de la phase d'huile et de la phase aqueuse pour fournir une composition alimentaire émulsifiée, pour résulter en une composition finale comprenant
• 0,0007 à 0,7 % en masse, sur la base de la masse de la composition finale, d'un ou plusieurs acides organiques différents de l'acide acétique,
• 0,0001 à 0,3 % en masse, sur la base de la masse de la composition finale, d'un ou plusieurs acides aminés,
• 0,00007 à 0,5 % en masse, sur la base de la masse de la composition finale, d'un ou plusieurs composés phénoliques, exprimés comme équivalents d'acide gallique.

14. Procédé selon la revendication 12 ou 13, dans lequel la source d'acides organiques est un ou plusieurs vinaigres.

15. Utilisation d'une source d'acides organiques dans une composition alimentaire émulsifiée huile-dans-eau, la source d'acide organique comprenant :
• de l'acide acétique,
• un ou plusieurs acides organiques différents de l'acide acétique, dans laquelle le rapport de la masse du total des acides organiques différents de l'acide acétique à la masse du total des acides organiques dans la source d'acides organiques est de 0,5 à 60 %,
• un ou plusieurs acides aminés, dans laquelle le rapport en masse du total des acides aminés au total des acides organiques dans la source d'acides organiques est de 0,05 à 20 %,
• un ou plusieurs composés phénoliques, dans laquelle le rapport en masse des composés phénoliques, exprimés comme équivalents d'acide gallique, au total des acides organiques dans la source d'acide organique est de 0,1 à 50 %,
dans une quantité telle que la composition alimentaire émulsifiée huile-dans-eau comprend :
• 0,0007 à 0,7 % en masse, sur la base de la masse de la composition alimentaire finale, d'un ou plusieurs acides organiques différents de l'acide acétique,
• 0,0001 à 0,3 % en masse, sur la base de la masse de la composition finale, d'un ou plusieurs acides aminés,
• 0,00007 à 0,5 % en masse, sur la base de la masse de la composition finale, d'un ou plusieurs composés phénoliques, exprimés comme équivalents d'acide gallique, comme déterminé par le dosage de Folin-Ciocalteu,
pour réduire l'arrière-goût dans la composition alimentaire émulsifiée huile-dans-eau, dans laquelle l'émulsion comprend de l'huile végétale et de l'eau, dans laquelle l'huile végétale comprend des acides gras en C18:1 et C18:2, dans une quantité, sur la base de la masse de l'huile végétale, de :
• C18:1 de 35 à 95 % en masse, de préférence de 40 à 90 % en masse,
• C18:2 de 1 à 50 % en masse, de préférence de 5 à 45 % en masse,
dans laquelle l'huile végétale comprend une huile oléique élevée, qui est définie comme une huile dans laquelle la composition d'acide gras comprend plus de 70 % en masse d'acide oléique, sur la base de la masse de l'huile oléique élevée dans laquelle la composition ne comprend pas d'huile d'olive.
